(19) Europäisches Patentamt / European Patent Office / Office européen des brevets

(11) **EP 1 890 047 A1**

(12) **EUROPEAN PATENT APPLICATION**
published in accordance with Art. 153(4) EPC

(43) Date of publication:
20.02.2008 Bulletin 2008/08

(51) Int Cl.:
*F16D 3/84* (2006.01)

(21) Application number: 06729988.3

(22) Date of filing: 24.03.2006

(86) International application number:
PCT/JP2006/306040

(87) International publication number:
WO 2006/123476 (23.11.2006 Gazette 2006/47)

(84) Designated Contracting States:
DE FR GB

(30) Priority: 16.05.2005 JP 2005143009
25.05.2005 JP 2005152207
25.05.2005 JP 2005152353
25.05.2005 JP 2005152223

(71) Applicant: HONDA MOTOR CO., LTD.
Tokyo 107-8556 (JP)

(72) Inventor: OKUBO, Shigeru,
c/o HONDA MOTOR CO. LTD.
Tokyo 1078556 (JP)

(74) Representative: Piésold, Alexander James
Frank B. Dehn & Co.
St Bride's House
10 Salisbury Square
London EC4Y 8JD (GB)

(54) **ROTATION DRIVE FORCE TRANSMISSION MECHANISM, CONSTANT VELOCITY UNIVERSAL JOINT AND RESIN JOINT BOOT CONSTRUCTING THE MECHANISM, AND METHOD OF TIGHTENING CLAMP BAND FOR CONSTANT VELOCITY UNIVERSAL JOINT**

(57) A rotation drive force transmission mechanism (10) has tripod constant-velocity joints (10a, 10b) coupled to respective ends of a shaft (14) in opposite phase. Outer members (12) of the tripod constant-velocity joints (10a, 10b) and portions of the shaft (14) are covered with boots (22). When the large-diameter tube (18) of each of the boots (22) is fastened to the corresponding outer member (12) by a first fastening band (24), a band crimping ratio is managed so as to fall within a predetermined range. Each of the outer members (12) has a boot mount (20) whose shape is selected to satisfy predetermined equations.

FIG. 2

EP 1 890 047 A1

**Description**

TECHNICAL FIELD

The present invention relates to a rotation drive force transmission mechanism, a constant-velocity (universal) joint and a resin-made joint boot therefor, and to a method of crimping or tightening a fastening (clamp) band to position and fix the fastening band on an outer member of a constant-velocity joint.

BACKGROUND ART

Motor vehicles such as automobiles or the like have a rotation drive force transmission mechanism for transmitting a rotational drive force produced by any of various prime movers such as an internal combustion engine, a motor, etc. to tires. The rotation drive force transmission mechanism generally employs a constant-velocity joint for transmitting the rotational drive force from one shaft to another shaft.

In efforts to simplify and reduce the size and weight of a transmitting structure of a driven-shaft power transmitting system, the applicant of the present application has proposed a driven force transmitting structure having tripod constant-velocity joints mounted respectively on both ends of an input shaft to which a driven force is transmitted, each of the tripod constant-velocity joints having rollers directly fitted over the outer circumferential surface of a trunnion (see Patent Document 1).

One of the tripod constant-velocity joints which is connected to one end of the input shaft and the other tripod constant-velocity joint which is connected to the other end of the input shaft are angularly positioned 180° out of phase with each other.

Each of the tripod constant-velocity joints comprises a hollow cylindrical outer member having an opening defined in one end thereof and an inner member disposed on an end of the input shaft and inserted into the outer member through the opening. Therefore, the end of the input shaft and the inner member are inserted into the outer member.

A joint boot is mounted on the outer member and the input shaft such that the joint boot extends from the end of the outer member onto the input shaft. The joint boot has a large-diameter tube in which the open end of the outer member is inserted, a small-diameter tube in which the input shaft is inserted, and a bellows interposed between the large-diameter tube and the small-diameter tube, the bellows being progressively smaller in diameter from the large-diameter tube to the small-diameter tube. Previously, most joint boots were made of rubber. In recent years, however, a growing number of joint boots have been made of synthetic resin due to its high durability and heat resistance.

Each of the large-diameter tube and the small-diameter tube has an annular band mounting groove defined in an outer circumferential wall surface thereof. Fastening bands are wound in the respective annular band mounting grooves.

After the fastening bands have been placed in the respective annular band mounting grooves, their outer circumferential surfaces are partly crimped so as to be pinched laterally by a crimping jig, thereby fastening the large-diameter tube and the small-diameter tube with the fastening bands and securely positioning the large-diameter tube and the small-diameter tube respectively on the outer member and the inner member. When each of the fastening bands is crimped, it forms a substantially $\Omega$-shaped crimped region.

The joint boot is prefilled with a grease compound.

The joint boot serves a sealing function, in order to prevent the grease compound from leaking out when the fastening bands are crimped, and also to prevent external foreign matter such as water, mud, etc. from entering the joint boot.

Consequently, if the fastening bands are not appropriately crimped, the large-diameter tube, for example, may possibly become displaced out of position. If the large-diameter tube is displaced, the grease compound may leak out of the joint boot, or external foreign matter such as water, mud, etc. may enter into the joint boot.

In particular, a joint boot made of synthetic resin is less elastic than a joint boot made of rubber. Therefore, the former joint boot, when it is fitted over a companion member, e.g., the outer member of a constant-velocity joint, tends to become unstable in use. Stated otherwise, the sealing ability of the joint boot is lowered unless the large-diameter tube thereof is reliably fitted over the companion member. To avoid such a drawback, the joint boot is required to have a specially designed structure to enable mounting on the companion member.

To meet such a requirement, Patent Document 2 discloses a mounting structure for avoiding dislodgment of a joint boot from a companion member, e.g., the outer member of a constant-velocity joint. The disclosed mounting structure has a ridge in an engaging groove defined in the mounting structure, wherein the engaging groove has a width-to-depth ratio of 3 or greater.

According to mounting structures for synthetic resin joint boots, as disclosed in Patent Document 2 and Patent Document 3, and as shown in FIG. 19 of the accompanying drawings, an annular engaging groove 2 and two annular ridges 3a, 3b, positioned one on each side of the annular engaging groove 2, are integrally provided on the outer circumferential surface of a boot mount of an outer member 1. After an annular land 5 on a large-diameter tube 4 on an end of a synthetic resin joint boot is fitted in the annular engaging groove 2 and they are positioned relatively to each other, the large-diameter tube 4 is fastened in position on the boot mount by a fastening band 6 that is crimped on the large-diameter tube 4.

While the motor vehicle is in motion, pebbles or the like on the road may be expelled and collide with the joint boots through the tires. Therefore, the joint boots should be protected against damage due to shocks applied by such hitting objects. Patent Document 4 discloses a joint boot mounted in position between a joint assembly and a shaft, and having a number of evenly spaced shock absorbing teeth disposed substantially on the entire outer circumferential surface thereof. However, it is highly difficult to form such teeth on the joint boot, and even if such teeth could be formed on the joint boot, the manufacturing cost of such a joint boot is considerably high.

Patent Document 5 reveals a protective cover for protecting a rubber joint boot. However, the protective cover requires a mounting space for avoiding interference between the protective cover and the floor panel of the vehicle body, and also suffers limitations on its mounting position. In addition, use of the protective cover results in an increase in the manufacturing cost of the joint boot.

In order to avoid damage to a joint boot, the applicant of the present application has proposed a space provided by separating an inner circumferential wall surface of the joint boot and an outer circumferential wall surface of an outer member near its open end, as disclosed in Patent Document 6.

Patent Document 1: Japanese Laid-Open Patent Publication No. 9-112565

Patent Document 2: Japanese Laid-Open Patent Publication No. 7-280092

Patent Document 3: Japanese Laid-Open Patent Publication No. 11-166624

Patent Document 4: Japanese Laid-Open Utility Model Publication No. 54-27266

Patent Document 5: Japanese Laid-Open Utility Model Publication No. 55-132525

Patent Document 6: Japanese Laid-Open Patent Publication No. 2003-214457

DISCLOSURE OF THE INVENTION

According to the mounting structure disclosed in Patent Document 2, the fastening band is crimped so that the crimped quantity of the fastening band, i.e., a value produced by subtracting the outside diameter of the outer member, after the fastening band has been crimped, from the sum of the outside diameter of the outer member before the fastening band is crimped and the wall thickness of the joint boot, remains the same regardless of the outside diameter of the outer member.

In this case, however, as the outside diameter of the outer member increases, the crimping force (surface pressure) applied per unit area of the inner circumferential wall surface of the fastening band decreases, resulting in a greater tendency for the large-diameter tube to be displaced, and hence reducing the sealing function of the joint boot. Conversely, as the outside diameter of the outer member decreases, the surface pressure increases, and the fastening band is more liable to tighten the large-diameter tube excessively. Therefore, the large-diameter tube is extended, tending to shorten the service life of the joint boot.

The above problem may be solved by changing the crimped quantity of the fastening band depending on the outside diameter of the outer member. This approach, however, requires a tedious and time-consuming process of experimentally confirming an appropriate crimped quantity of the fastening band for each of various outside diameters of the outer member.

According to the mounting structure disclosed in Patent Document 3, when the large-diameter tube of the synthetic resin joint boot is tightened by the fastening band, the sealing capability is expected to improve because the ridges bite into the inner wall surface of the large-diameter tube. However, if the land is lowered in height in order to allow the large-diameter tube of the joint boot to be fitted easily over the end of the outer member, then the sealing capability is reduced. In addition, when the fastening band is crimped, the land is not snugly fitted in the engaging groove, and therefore the large-diameter tube of the joint boot is apt to become displaced in directions into or out of the outer member, and hence is difficult to be positioned reliably with respect to the boot mount.

The joint boot disclosed in Patent Document 6 is resistant to damage when it is hit by pebbles or the like. However, the disclosed joint boot is harder than and hence less flexible than rubber. If tripod constant-velocity joints are mounted on respective opposite ends of an input shaft, as disclosed in Patent Document 1, then even joint boots that are formed from synthetic resin are required to be highly flexible.

It is a general object of the present invention to provide a rotation drive force transmission mechanism, which allows a shaft to slide an appropriate distance when a pair of tripod constant-velocity joints are coupled respectively to opposite ends of the shaft in opposite phase, and which also prevents the shaft from bottoming upon sliding movement thereof.

Another object of the present invention is to provide a constant-velocity joint having an outer member with a boot mount shaped for reliably positioning the large-diameter tube of a joint boot when a fastening band is crimped on the large-diameter tube.

Still another object of the present invention is to provide a synthetic resin joint boot, which is less vulnerable to damage when hit by pebbles or the like, and which is highly flexible.

Yet another object of the present invention is to provide a method of crimping a fastening band for a constant-velocity joint, which is effective to prevent the large-diameter tube of a joint boot from being displaced, and also to prevent the joint boot from being reduced in service life.

According to an aspect of the present invention, there is provided a mechanism for transmitting a rotational drive force, comprising a shaft, a first tripod constant-velocity joint axially movably coupled to an end of the shaft, and a second tripod constant-velocity joint axially movably coupled to another end of the shaft, the first tripod constant-velocity joint and the second tripod constant-velocity joint being identical in structure to each other and fixed with respect to each other in opposite phase, each of the first tripod constant-velocity joint and the second tripod constant-velocity joint comprising an outer member and a boot of synthetic resin fastened to the shaft and the outer member by respective boot bands, the boot having a large-diameter fixing member for receiving an end of the outer member inserted therein, a small-diameter fixing member for receiving an end portion of the shaft inserted therein, and a bellows interposed between the large-diameter fixing member and the small-diameter fixing member and being progressively smaller in diameter from the large-diameter fixing member toward the small-diameter fixing member, the bellows comprising an alternate succession of peaks and valleys, wherein when the outer member is inserted in the large-diameter fixing member, one of the peaks which is closest to the large-diameter fixing member has a wall thickness greater than the remaining peaks.

According to the present invention, the wall thickness of the peak, which is closest to the large-diameter fixing member, is maximum and highly rigid, and hence this peak is the least deformable of all the peaks. Therefore, by setting the wall thickness and rigidity of this peak, the length by which the boot is extended and contracted or curved is controlled to keep the spring constant of the boot easily within a given range.

As a result, the distance that the shaft coupled to the constant-velocity joints slides can be controlled so as to be set to an appropriate distance, while also preventing bottoming of the shaft when it slides.

According to the present invention, the first tripod constant-velocity joint coupled to one of the ends of the shaft and the second tripod constant-velocity joint coupled to the other end of the shaft are angularly positioned in opposite phase. With this arrangement, vibrations which are produced in axial directions of the shaft due to induced thrust forces are oriented in opposite directions and cancel each other, so that the shaft is prevented from being vibrated in an axial direction.

According to the present invention, furthermore, the outer member may have a boot mount on which the boot is mounted, the boot comprising an annular surface of substantially flat cross section, the boot being mounted on the annular surface with an engaging groove being defined in the annular surface, and an annular slanted surface inclined to the annular surface. A groove bottom of the engaging groove and a point where the slanted surface starts to rise from the annular surface may be spaced horizontally from each other by a distance L2. The boot may have an annular ridge engaging in the engaging groove, and a crest of the annular ridge and an end face of the boot may be spaced horizontally from each other by a distance L1. When the difference between the distance L2 and the distance L1 is represented by L (L = L2 - L1), and the annular slanted surface is inclined to the annular surface by an angle $\theta$, the difference L (mm) and the angle $\theta$ (°) may be set to values in ranges satisfying the following equations (1) through (5):

$$(1) \quad L \leq 0.0833\theta - 3.4796$$

$$(2) \quad L \leq -0.0188\theta + 1.2353$$

$$(3) \quad L \geq 0.0176\theta - 3.372$$

$$(4) \quad \theta \geq 20$$

$$(5) \quad \theta \leq 60.$$

By setting the value of the distance L2 between the groove bottom of the engaging groove and the point where the slanted surface starts to rise from the annular surface, and the value of the angle θ of the slanted surface with respect to the annular surface, in ranges satisfying the above equations (1) through (5), the end shape of the outer member is established such that when the boot band is tightened, the boot fixing member is reliably positioned with respect to the boot mount of the outer member without being displaced off position, a desired sealing ability of the outer member is provided, and the outer member is highly machinable.

If the angle θ is less than 20°, then the end of the boot rides a greater distance onto the slanted surface, resulting in a reduction in both sealing and positioning ability. If the angle θ is greater than 60°, then the slanted surface becomes less machinable.

In view of the sealing ability, positioning ability, and machinability, which are taken into account together, the difference L (mm) and the angle θ (°) may be set to values in ranges satisfying the following equations (6) through (8):

$$(6)\ \mathtt{L} \leq 0.0833\theta - 3.4796$$

$$(7)\ \mathtt{L} \geq 0.0833\theta - 4.796$$

$$(8)\ \theta = 45 \pm 1.5.$$

Furthermore, one of the valleys which is closest to the large-diameter fixing member should preferably have a radius of curvature greater than those of the remaining valleys.

By thus setting the radius of curvature of this valley, the distance by which the valley is extended and contracted or curved can be controlled. With the radius of curvature of the valley being thus set in addition to the wall thickness of the peak that is closest to the large-diameter fixing member, the spring constant of the boot may be set with ease.

The large-diameter fixing member and the small-diameter fixing member of the boot usually have band mounting slots in which boot bands are tightened. Preferably, the boot should have a curved portion extending from a bottom of the band mounting slot in the small-diameter fixing member to a side wall of one of the peaks which is closest to the small-diameter fixing member. The curved portion is effective to give a large wall thickness to the boot portion between the small-diameter fixing member and the bellows. Therefore, the boot portion between the small-diameter fixing member and the bellows is rigid enough to prevent cracking even when subjected to stress concentration.

The curved portion has a radius of curvature ranging from 0.4 to 0.6 mm. If the radius of curvature of the curved portion is smaller than 0.4 mm, then the boot portion between the small-diameter fixing member and the bellows is not rigid enough. If the radius of curvature of the curved portion is greater than 0.6 mm, then the boot band tends to interfere with the curved portion, making it difficult to tighten the boot band in a manner to press the small-diameter fixing member under a uniform force. In addition, the boot portion between the small-diameter fixing member and the bellows becomes too rigid and less flexible.

According to another aspect of the present invention, there is provided a constant-velocity joint comprising an outer member including a boot mount disposed on an end thereof, and a boot of synthetic resin including a tubular fixing member disposed on another end thereof, wherein the fixing member is fixed to the boot mount by mounting the fixing member on the boot mount and thereafter fastening the fixing member with a boot band. The boot mount comprises an annular surface of substantially flat cross section, the boot being mounted on the annular surface, with an engaging groove defined in the annular surface, and an annular slanted surface inclined to the annular surface. A groove bottom of the engaging groove and a point where the slanted surface starts to rise from the annular surface are spaced horizontally from each other by a distance L2. The boot has an annular ridge engaging in the engaging groove, wherein a crest of the annular ridge and an end face of the boot are spaced horizontally from each other by a distance L1. When the difference between the distance L2 and the distance L1 is represented by L (L = L2 - L1), and the annular slanted surface is inclined to the annular surface by an angle θ, the difference L (mm) and the angle θ (°) are set to values in ranges satisfying the following equations (1) through (5):

$$(1)\ \mathtt{L} \leq 0.0833\theta - 3.4796$$

$$(2) \ \mathbf{L} \leq -0.0188\theta + 1.2353$$

$$(3) \ \mathbf{L} \geq 0.0176\theta - 3.372$$

$$(4) \ \theta \geq 20$$

$$(5) \ \theta \leq 60.$$

By setting the value of the distance L2 between the groove bottom of the engaging groove and the point where the slanted surface starts to rise from the annular surface, and the value of the angle θ of the slanted surface with respect to the annular surface, in ranges satisfying the above equations (1) through (5), an end shape of the outer member is established such that when the boot band is tightened, the boot fixing member is reliably positioned with respect to the boot mount of the outer member without being displaced off position. Hence, a desired sealing ability of the outer member is provided, and the outer member is highly machinable.

If the angle θ is less than 20°, then the end of the boot rides a greater distance onto the slanted surface, resulting in a reduction in sealing and positioning ability. If the angle θ is greater than 60°, then the slanted surface becomes less machinable.

In view of the sealing ability, positioning ability, and machinability, which are taken into account together, the difference L (mm) and the angle θ (°) may be set to values in ranges satisfying the following equations (6) through (8):

$$(6) \ \mathbf{L} \leq 0.0833\theta - 3.4796$$

$$(7) \ \mathbf{L} \geq 0.0833\theta - 4.796$$

$$(8) \ \theta = 45 \pm 1.5.$$

When the boot band is tightened, the boot fixing member is reliably positioned with respect to the boot mount of the outer member, and a favorable sealing capability is provided.

According to still another aspect of the present invention, there is also provided a synthetic resin boot for use with a constant-velocity joint having an outer member, comprising a large-diameter tube for receiving an end of the outer member inserted therein, a small-diameter tube for receiving an end portion of a shaft inserted therein, and a bellows interposed between the large-diameter tube and the small-diameter tube and being progressively smaller in diameter from the large-diameter tube toward the small-diameter tube. The bellows comprises an alternate succession of peaks and valleys, wherein when the outer member is inserted into the large-diameter tube, one of the peaks which is closest to the large-diameter tube has an inner wall surface spaced from an outer wall surface of an open end of the outer member, providing a space therebetween, and the one peak which is closest to the large-diameter tube has a wall thickness greater than the remaining peaks.

With the above arrangement, peaks other than the peak which is closest to the large-diameter tube are more flexible than the latter peak, increasing the deformability of the bellows. Furthermore, deforming stresses applied to the synthetic resin boot are reduced when the bellows is extended and contracted or curved. Since stresses are prevented from concentrating on the boot portion between the large-diameter tube and the peak which is closest to the large-diameter tube, unintentional cracking of the boot portion can be prevented.

Since the wall thickness of the peak which is closest to the large-diameter tube is greatest, this peak is highly rigid and is the least deformable of all the peaks.

Therefore, by setting the wall thickness and rigidity of this peak, the length by which the synthetic resin boot is extended and contracted or curved can be controlled. Stated otherwise, the spring constant of the boot can easily be set within a given range. Consequently, the displacement of a driven shaft coupled to the constant-velocity joint can be controlled.

The space provided in the boot is effective in reducing shocks applied to the boot when foreign matter such as pebbles or the like hit the boot.

One of the valleys which is closest to the large-diameter tube should preferably have a radius of curvature greater than those of the remaining valleys. Since the valley which is closest to the large-diameter tube is more flexible than the other valleys, deforming stresses acting on the bellows are reduced when this valley is extended and contracted or curved. Consequently, the peak, which has the greatest wall thickness and which is less deformable, is not subject to stress concentrations, and the boot portion between this peak and the large-diameter tube is prevented from cracking.

By thus setting the radius of curvature of the valley, the distance by which the valley is extended and contracted or curved can be controlled. With the radius of curvature of the valley being thus set, in addition to the wall thickness of the peak that is closest to the large-diameter tube, the spring constant of the synthetic resin boot may be set with ease.

The large-diameter tube and the small-diameter tube of the boot of synthetic resin usually have band mounting slots in which boot bands are tightened. Preferably, the boot should have a curved portion extending from a bottom of the band mounting slot in the small-diameter tube to a side wall of one of the peaks which is closest to the small-diameter tube. The curved portion is effective to give a large wall thickness to a boot portion between the small-diameter tube and the bellows. Therefore, the boot portion between the small-diameter tube and the bellows is rigid enough to prevent the boot portion from cracking, even when subjected to stress concentrations.

The curved portion has a radius of curvature ranging from 0.4 to 0.6 mm. If the radius of curvature of the curved portion is smaller than 0.4 mm, then the boot portion between the small-diameter tube and the bellows is not rigid enough. If the radius of curvature of the curved portion is greater than 0.6 mm, then the boot band tends to interfere with the curved portion, making it difficult to tighten the boot band in a manner that presses the small-diameter tube under a uniform force. In addition, the boot portion between the small-diameter tube and the bellows becomes too rigid and less flexible.

According to yet another aspect of the present invention, there is further provided a method of crimping a fastening band of a constant-velocity joint after an outer member of the constant-velocity joint has been inserted into a tubular insert on an end of a joint boot and the fastening band is wound around an outer circumferential surface of the tubular insert. The crimping method includes a step of managing crimping of the fastening band based on a band crimping ratio defined by the following equation (A):

$$\texttt{band crimping ratio (\%) = (the outside diameter of the}$$
$$\texttt{outer member + the wall thickness of the joint boot before}$$
$$\texttt{the fastening band is crimped)/the inside diameter of the}$$
$$\texttt{fastening band after the fastening band is crimped} \cdots \texttt{(A)}.$$

If the band crimping ratio is the same, even though the outer member has a different outside diameter, the surface pressure of the fastening band is essentially the same. Stated otherwise, the surface pressure of the fastening band may be kept within a desired range by managing the band crimping ratio.

According to the present invention, therefore, the surface pressure of the fastening band is kept within a desired range by managing the band crimping ratio. The surface pressure of the fastening band is thus prevented from becoming either excessively large or small. Consequently, the large-diameter tube is prevented from becoming displaced off position, which could cause a reduction in sealing performance. Further, the service life of the joint boot is prevented from being reduced due to an extension of the large-diameter tube.

If the joint boot is made of synthetic resin, then an appropriate band crimping ratio is in a range from 0.16 to 1.3 %.

If the joint boot comprises a joint boot made of rubber, which has a higher modulus of elasticity and hence is more liable to being extended than synthetic resin, then the band crimping ratio may be within a wider range than that of the synthetic resin joint boot, i.e., the crimping ratio may be in a range from 0.1 to 1.6 %.

BRIEF DESCRIPTION OF THE DRAWINGS

FIG. 1 is a longitudinal cross-sectional view, taken in an axial direction, of a rotation drive force transmission mechanism according to an embodiment of the present invention;

FIG. 2 is a longitudinal cross-sectional view, taken in an axial direction, of a tripod constant-velocity joint of the rotation drive force transmission mechanism;

FIG. 3 is a perspective view of the tripod constant-velocity joint with a synthetic resin joint boot mounted thereon;

FIG. 4 is a longitudinal cross-sectional view of the joint boot;

FIG. 5 is an enlarged fragmentary longitudinal cross-sectional view of an outer member of the joint boot;

FIG. 6 is an enlarged fragmentary longitudinal cross-sectional view of a modified outer member;

FIG. 7 is an enlarged fragmentary cross-sectional view of the boot of the constant-velocity joint;

FIG. 8 is an enlarged fragmentary cross-sectional view of the outer member and a large-diameter tube of the joint boot before a fastening band is crimped in the joint structure shown in FIG. 1;

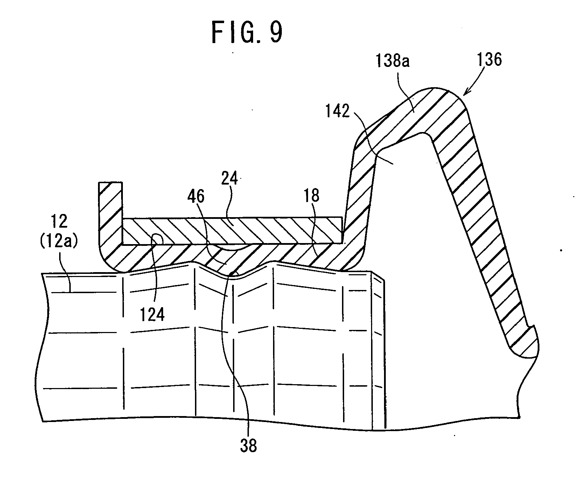

FIG. 9 is an enlarged fragmentary cross-sectional view of the large-diameter tube of the joint boot and the outer member inserted in the large-diameter tube;

FIG. 10 is an enlarged fragmentary cross-sectional view of the joint boot near a small-diameter tube thereof;

FIG. 11 is an enlarged fragmentary cross-sectional view of the outer member and the large-diameter tube of the joint boot after the fastening band is crimped in the joint structure shown in FIG. 1;

FIG. 12 is a graph showing the relationship between band crimping ratios and surface pressures;

FIG. 13 is a graph showing the relationship between outside diameters of the outer member and surface pressures when a first fastening band is crimped on outer members of different outside diameters, at a constant band crimping ratio and at a constant band crimping quantity;

FIG. 14 is an enlarged fragmentary cross-sectional view of an outer member free of an engaging groove, and the large-diameter tube of a joint boot before a fastening band is crimped thereon;

FIG. 15 is an enlarged fragmentary cross-sectional view of the outer member and the large-diameter tube of the joint boot shown in FIG. 14, after the fastening band has been crimped thereon;

FIG. 16 is an enlarged fragmentary cross-sectional view of the large-diameter tube of a modified joint boot and an outer member inserted in the large-diameter tube;

FIG. 17 is a diagram showing an allowable range in the relationship between L and θ;

FIG. 18 is a longitudinal cross-sectional view, taken in an axial direction, of a Barfield-type constant-velocity joint, according to another embodiment of the present invention; and

FIG. 19 is an enlarged fragmentary cross-sectional view showing a conventional mounting structure for a joint boot.

BEST MODE FOR CARRYING OUT THE INVENTION

A rotation drive force transmission mechanism, a constant-velocity joint and a resin-made joint boot therefor, together with a method of crimping a fastening band according to embodiments of the present invention, shall be described below with reference to the accompanying drawings. The rotation drive force transmission mechanism is typically incorporated in a motor vehicle such as an automobile or the like.

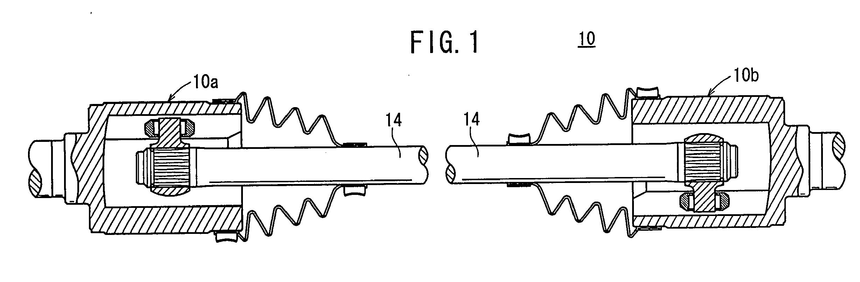

FIG. 1 is a longitudinal cross-sectional view, taken in an axial direction, of a rotation drive force transmission mechanism 10 according to an embodiment of the present invention. As shown in FIG. 1, the rotation drive force transmission mechanism 10 comprises a shaft 14, a first tripod constant-velocity joint 10a coupled to an end of the shaft 14 for axial sliding movement thereon, and a second tripod constant-velocity joint 10b coupled to the other end of the shaft 14 for axial sliding movement thereon. The first and second tripod constant-velocity joints 10a, 10b are angularly positioned in opposite phase, e.g., 180° out of phase, with each other. The first and second tripod constant-velocity joints 10a, 10b are structurally identical to each other, and hence only one of them shall be described in detail below. The term "opposite phase" refers to a state in which the first and second tripod constant-velocity joints 10a, 10b are not in phase with each other.

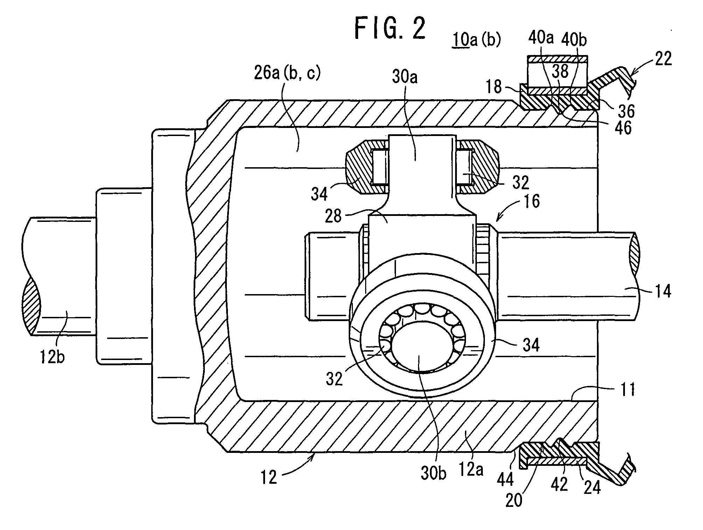

As shown in FIG. 2, the tripod constant-velocity joint 10a (10b) comprises a bottomed hollow cylindrical outer member 12 integrally coupled to an end of a first shaft (not shown), and an inner member 16 fixed to an end of the shaft 14, which serves as a second shaft and which is housed in a space in the outer member 12.

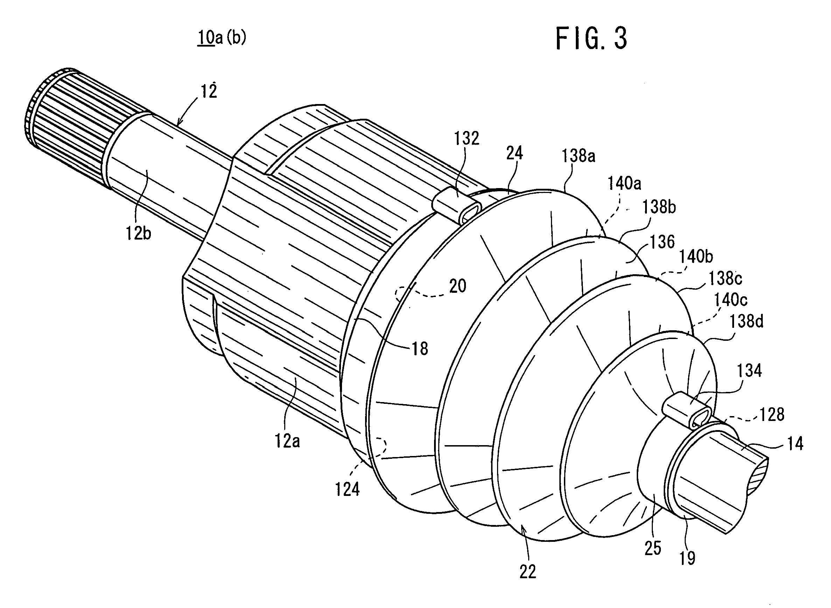

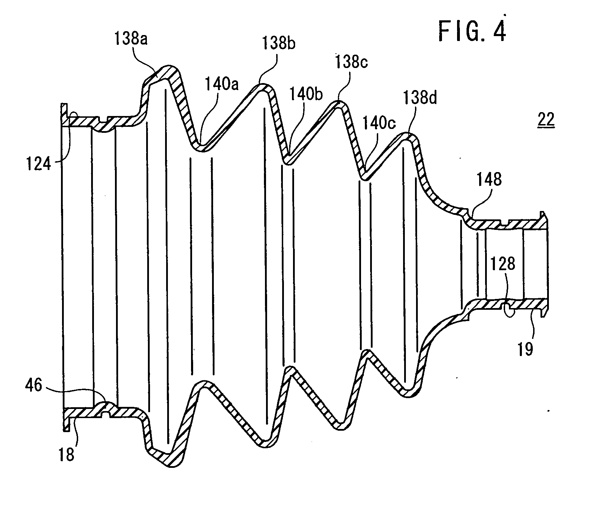

As shown in FIGS. 3 and 4, the tripod constant-velocity joint 10a (10b) includes a joint boot (hereinafter referred to as a "boot") 22 of synthetic resin having one end thereof defining a large-diameter fixing member (large-diameter tube) 18, which is fitted over the outer circumferential surface of an end (boot mount 20 to be described later) of the outer member 12, and an opposite end defining a small-diameter fixing member (small-diameter tube) 19, which is smaller in diameter than the large-diameter tube 18, fitted over the outer circumferential surface of the shaft 14. A large-diameter first fastening band 24 fastens the large-diameter tube 18 to the boot mount 20 of the outer member 12, and a small-diameter second fastening band 25 fastens the small-diameter tube 19 to the outer circumferential surface of the shaft 14.

As shown in FIG. 2, the outer member 12 has three axial guide grooves 26a, 26b, 26c (the guide grooves 26b, 26c are omitted from illustration) defined in an inner wall surface thereof and angularly spaced at 120° intervals around the axis of the outer member 12. Each of the axial guide grooves 26a, 26b, 26c includes a ceiling having a curved cross sectional shape and a pair of slide surfaces extending from both sides of the ceiling in confronting relation to each other and having arcuate cross-sectional shapes.

The inner member 16 comprises a spider 28 fitted over the shaft 14 through spline-type serrations. The spider 28 comprises a central ring and three trunnions 30a, 30b, 30c (the trunnion 30c is omitted from illustration) projecting radially outwardly from the central ring toward the respective guide grooves 26a, 26b, 26c and angularly spaced at 120° intervals around the axis of the inner member 16. Each of the trunnions 30a, 30b, 30c comprises a cylindrical rod having a constant outside diameter.

The inner member 16 also has ring-shaped rollers 34 rotatably mounted respectively on the outer circumferential surfaces of the trunnions 30a, 30b, 30c with a plurality of rolling elements 32 interposed therebetween. The rolling elements 32 may be formed from various bearings, including needle bearings, roller bearings, etc. Alternatively, the rolling elements 32 may be dispensed with, and the rollers 34 may be directly mounted, so as to be slidable along the outer circumferential surfaces of the trunnions 30a, 30b, 30c.

The outer member 12 comprises a cup 12a having an opening 11 defined therein and a shank 12b integrally formed with the closed end of the cup 12a. The outer member 12 also has a boot mount 20 on the outer circumferential surface thereof, which is close to the end edge of the opening 11. The large-diameter tube 18 of the boot 22 is mounted on the boot mount 20.

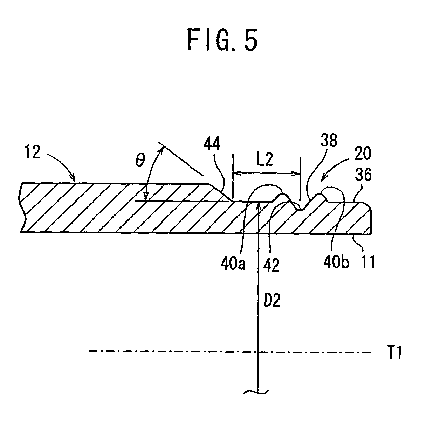

As shown in FIG. 5, the boot mount 20 includes an annular outer surface 36 of substantially flat cross section extending axially from the end edge of the opening 11 toward the shank 12b and having a reduced thickness over a predetermined axial distance, an annular engaging groove 38 of substantially arcuate cross section defined in the annular outer surface 36 at a position axially spaced a predetermined distance from the end edge of the opening 11, a pair of axially spaced annular ridges 40a, 40b projecting radially outwardly from the annular outer surface 36 and closely spaced across the annular engaging groove 38 interposed therebetween, and an annular slanted surface 44 disposed at the end of the annular outer surface 36 remotely from the end edge of the opening 11 and inclined at an angle □ with respect to the annular outer surface 36.

The distance between a groove bottom 42 of the engaging groove 38 and the point where the slanted surface 44 starts to rise from the annular outer surface 36, along a horizontal direction parallel to the axis T1 of the outer member 12, is represented by L2.

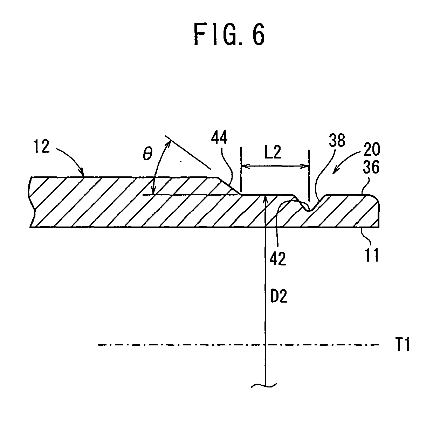

FIG. 6 shows a modified outer member having an annular outer surface 36 which is free of the annular ridges 40a, 40b and which has an engaging groove 38 defined in the annular outer surface 36 that is flat over its entire axial length.

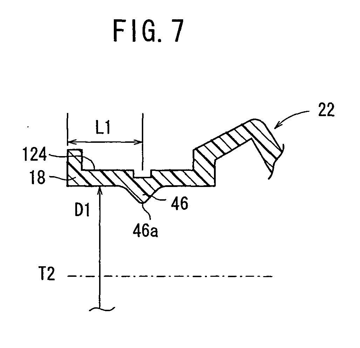

As shown in FIGS. 3 and 4, the boot 22 comprises a bellows 136 having a corrugated cross-sectional shape made up of an alternate succession of peaks and valleys (to be described in detail later). The large-diameter tube 18 (see FIG. 7) is disposed on one end of the bellows 136 and has an inside diameter D1 corresponding to an outside diameter D2 of the boot mount 20. The small-diameter tube 19 is disposed on the other end of the bellows 136 and has an inside diameter corresponding to the outside diameter of the shaft 14. The inside diameter D1 of the large-diameter tube 18 and the outside diameter D2 of the outer member 12 are selected to satisfy the relationship D1 s D2. In FIG. 7, T2 represents the axis of the boot 22.

The large-diameter tube 18 mounted on the boot mount 20 has an annular ridge 46 projecting radially inwardly, wherein the annular ridge 46 engages in and is positioned by the engaging groove 38 in the boot mount 20. The distance between a crest 46a of the annular ridge 46 and the end face of the boot 22 along a horizontal direction parallel to the axis T2 is represented by L1. The large-diameter tube 18 also has a first mounting slot 124 defined in an outer surface thereof remotely from the annular ridge 46.

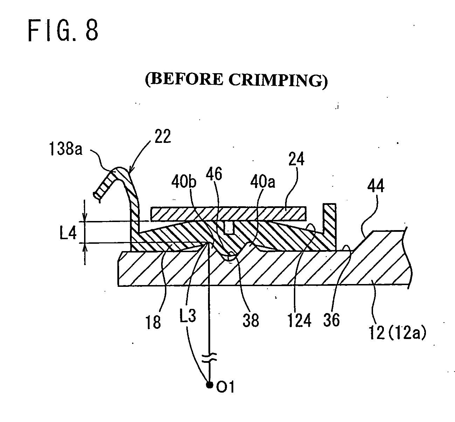

FIG. 8 shows the cup 12a of the outer member 12, which is inserted in the large-diameter tube 18, and the first fastening band 24 placed in the first mounting slot 124.

The outside diameter D2 of the outer member 12 is defined by a distance D3 from the center O1 of the outer member 12 to the crests of the annular ridges 40a, 40b. The boot 22 has a wall thickness defined by a distance L4 from the inner circumferential wall surface of the large-diameter tube 18, which abuts against the annular ridges 40a, 40b, to the outer circumferential wall surface of the large-diameter tube 18.

The first fastening band 24 and the second fastening band 25 have outer circumferential surfaces which are partly crimped and pinched laterally by a crimping jig (not shown), thereby fastening the large-diameter tube 18 to the outer circumferential wall surface of the outer member 12 near the opening 11 thereof with the first fastening band 24, and also fastening the small-diameter tube 19 to the outer circumferential wall surface of the shaft 14 with the second fastening band 25.

As shown in FIG. 3, when the outer circumferential surfaces of the first fastening band 24 and the second fastening band 25 are crimped, respective crimped portions 132, 134 are formed protruding radially outwardly by a certain length.

As described above, the bellows 136 extends axially between the large-diameter tube 18 and the small-diameter tube 19 and is made up of an alternate succession of peaks and valleys. The bellows 136 is progressively reduced in diameter from the large-diameter tube 18 toward the small-diameter tube 19.

The boot 22 is prefilled with a grease compound before the outer member 12 and the shaft 14 are inserted respectively into the large-diameter tube 18 toward the small-diameter tube 19. When the first fastening band 24 and the second fastening band 25 are crimped as described above, the grease compound becomes sealed inside the boot 22.

FIG. 4 shows the boot 22 in longitudinal cross section. In the present embodiment, the boot 22 is made of a polyester-based thermoplastic elastomer (TPE).

The bellows 136 of the boot 22 has four peaks, including a first peak 138a, a second peak 138b, a third peak 138c, and a fourth peak 138d, which are arranged successively from the large-diameter tube 18 toward the small-diameter tube 19, and three valleys, including a first valley 140a, a second valley 140b, and a third valley 140c, which are interposed between the first peak 138a and the second peak 138b, between the second peak 138b and the third peak 138c, and between the third peak 138c and the fourth peak 138d, respectively. Therefore, the first through fourth peaks 138a through 138d and the first through third valleys 140a through 140c are alternately arranged successively on the boot 22.

As shown in FIG. 4, the first peak 138a, which is closest to the large-diameter tube 18, has a wall thickness that is greater than that of the remaining second through fourth peaks 138b through 138d. Specifically, if the wall thicknesses of the second through fourth peaks 138b through 138d are in a range from 0.95 to 1.05 mm, then the wall thickness of the first peak 138a is of about 1.7 mm. Therefore, the first peak 138a is less flexible and hence more rigid than the second through fourth peaks 138b through 138d. The annular ridge 46 projecting radially inwardly from the large-diameter tube 18 engages in the annular engaging groove 38 defined circumferentially on the annular outer surface 36 of the outer member 12.

When the outer member 12 is inserted into the large-diameter tube 18, the first peak 138a, which projects radially outwardly from the terminal end of the bellows 136, is spaced radially outwardly from the outer circumferential wall of the open end of the outer member 12, thereby providing a space 142 between the outer circumferential wall of the open end of the outer member 12 and the inner wall surface of the first peak 138a.

The first valley 140a, which is closest to the large-diameter tube 18, has a radius of curvature that is greater than that of the remaining second and third valleys 140b, 140c. Stated otherwise, the first valley 140a has a bottom portion, which is rounder than the second and third valleys 140b, 140c. Accordingly, as described later, the first valley 140a is elastically deformable to a greater extent than the second and third valleys 140b, 140c.

The respective radii of curvature of the first valley 140a, the second valley 140b, and the third valley 140c may be set to 0.75 mm, 0.5 mm, and 0.5 mm, for example.

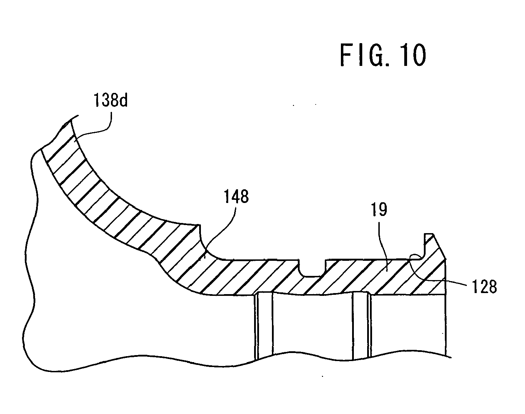

The first mounting slot 124, which has a predetermined axial width, is defined in the outer surface of the large-diameter tube 18. As shown in FIG. 10, the small-diameter tube 19 of the boot 22 has a curved portion 148 having an arcuate cross-sectional shape adjacent to a second mounting slot 128 defined in an outer surface of the small-diameter tube 19. Specifically, the curved portion 148 extends from the bottom of the second mounting slot 128 to a side wall of the fourth peak 138d. The curved portion 148 is effective to impart a large wall thickness to the boot portion between the small-diameter tube 19 and the bellows 136. Therefore, the boot portion between the small-diameter tube 19 and the bellows 136 is rigid enough to prevent cracking, even when it is subjected to stress concentration.

The curved portion 148 has a radius of curvature in the range from 0.4 to 0.6 mm. If the radius of curvature of the curved portion 148 is smaller than 0.4 mm, then the boot portion between the small-diameter tube 19 and the bellows 136 is not rigid enough. If the radius of curvature of the curved portion 148 is greater than 0.6 mm, then the second fastening band 25 tends to interfere with the curved portion 148, causing the second fastening band 25 to become inclined and fail to press the small-diameter tube 19 uniformly with force over its entirety. In addition, the boot portion between the small-diameter tube 19 and the bellows 136 becomes too rigid and hence less flexible. Preferably, the radius of curvature of the curved portion 148 is in the range from 0.45 to 0.55 mm.

The rotation drive force transmission mechanism 10 according to the above embodiment is basically constructed as described above. Operation and advantages of the rotation drive force transmission mechanism 10 shall be described below.

First, a process of assembling the rotation drive force transmission mechanism 10 shall be described.

The shaft 14 is press-fitted into the small-diameter tube 19 of the boot 22. The inner member 16 is mounted on the distal end portion of the shaft 14, which projects from the small-diameter tube 19, and the inner member 16 and the distal end portion of the shaft 14 are inserted into the outer member 12. Thereafter, the rollers 34, which are rotatably mounted respectively on the trunnions 30a, 30b, 30c of the inner member 16, are rollingly inserted respectively into the guide grooves 26a, 26b, 26c in the outer member 12. Then, the outer member 12 is press-fitted into the large-diameter tube 18 of the boot 22.

Subsequently, the first fastening band 24 is mounted in the first mounting slot 124 of the large-diameter tube 18, and the second fastening band 25 is mounted in the second mounting slot 128 of the small-diameter tube 19. The outer circumferential surfaces of the first fastening band 24 and the second fastening band 25 are partly crimped and pinched laterally by a non-illustrated crimping jig, producing substantially Ω-shaped crimps 132, 134 protruding radially outwardly from the first fastening band 24 and the second fastening band 25 (see FIG. 3). The large-diameter tube 18 and the small-diameter tube 19 are now tightened respectively around the outer member 12 and the shaft 14.

Crimping of the first fastening band 24 is managed by a band crimping ratio, defined according to equation (A) below, rather than by a crimping quantity.

Band crimping ratio (%) = (the outside diameter of the outer member 12 + the wall thickness of the boot 22 before the first fastening band 24 is crimped)/the inside diameter of the first fastening band 24 after the first fastening band 24 is crimped                 ···(A)

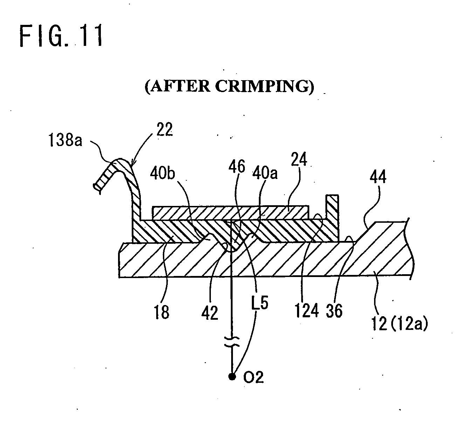

As shown in FIG. 11, the inside diameter of the first fastening band 24, after it has been crimped, is represented by the distance L5 from the center 02 of the crimped first fastening band 24 to the inner circumferential surface thereof. When the first fastening band 24 is crimped, the annular ridge 46 engages within the annular engaging groove 38.

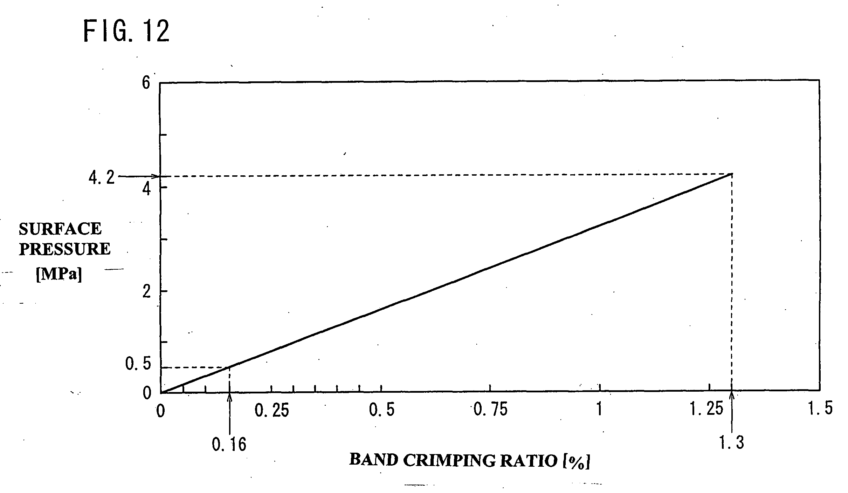

FIG. 12 shows a linear curve representing the relationship between band crimping ratios on the horizontal axis and surface pressures on the vertical axis. The linear curve has a substantially constant gradient regardless of the outside diameter of the outer member 12. Therefore, based on the linear curve, it is possible to obtain a target surface pressure, by managing only the band crimping ratio, regardless of the outside diameter of the outer member 12.

According to the present embodiment, the boot 22 is made of PTE, wherein the target surface pressure for the first fastening band 24 should preferably be in the range from 0.5 to 4.2 MPa. If the target surface pressure is less than 0.5 MPa, then since the tightening force is small, the large-diameter tube 18 tends to be displaced off position. If the target surface pressure is in excess of 4.2 MPa, then the first fastening band 24 excessively tightens the large-diameter tube 18, which is extended, tending to shorten the service life of the boot 22. More preferably, the target surface pressure for the first fastening band 24 should be in the range from 0.65 to 1.95 MPa.

If the boot 22 is mounted on an outer member having a different outside diameter, then in order to place the surface pressure within the range from 0.5 to 4.2 MPa, the crimping force is changed to maintain the band crimping ratio for the first fastening band 24, as defined by equation (A), within the range from 0.16 to 1.3 %. More preferably, in order to place the surface pressure within the range from 0.65 to 1.95 MPa, the band crimping ratio of the first fastening band 24 should be kept in a range from 0.2 to 0.6 %.

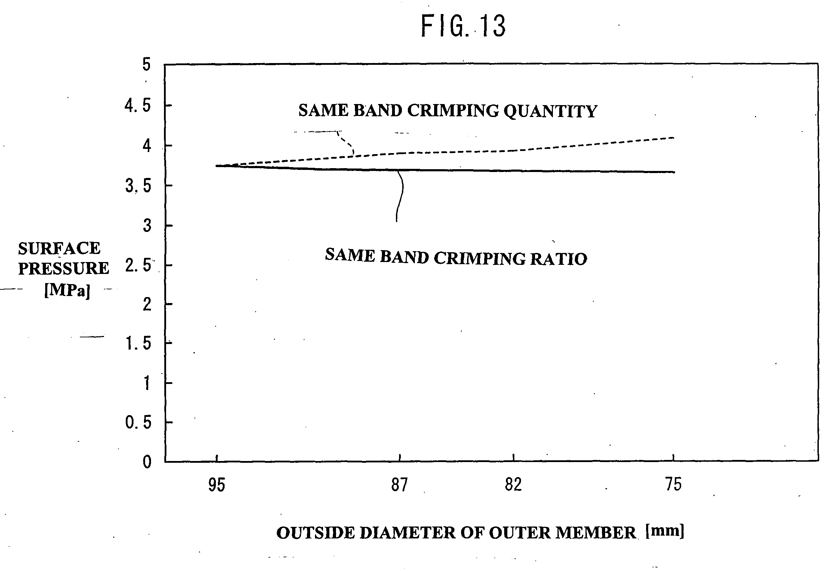

FIG. 13 is a graph showing the relationship between outside diameters of the outer member and surface pressure, when the first fastening band 24 is crimped on outer members of different outside diameters, at a band crimping ratio of about 1.1 % and a constant band crimping quantity. As can be seen from FIG. 13, a substantially constant surface pressure is achieved at a constant band crimping ratio.

According to the present embodiment, therefore, crimping of the first fastening band 24 is managed by controlling the band crimping ratio. Consequently, a target surface pressure can easily be obtained and hence an appropriate surface pressure can be achieved, thereby preventing the large-diameter tube 18 from being displaced off position, while also avoiding a shortage of service life.

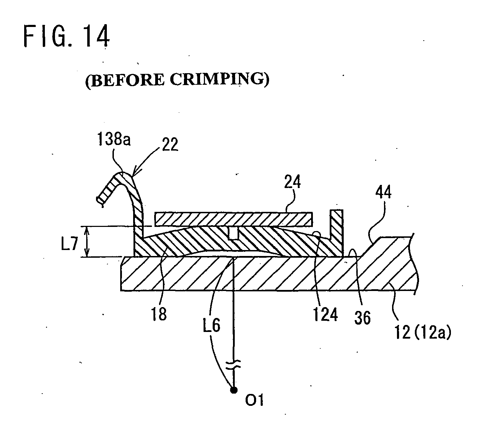

If the annular outer surface 36 of the boot mount 20 is free of the annular ridges 40a, 40b, then, as shown in FIG. 14, the distance L6 from the center 01 of the outer member 12 to the annular outer surface 36, which is smooth and continuous, is defined as the outside diameter of the outer member 12. Therefore, the outside diameter D2 of the outer member 12 represents the distance from the center 01 of the outer member 12 to the surface of the outer member 12, which is tightened by the boot 22, and which is diametrically spaced at a maximum distance from the center 01 of the outer member 12.

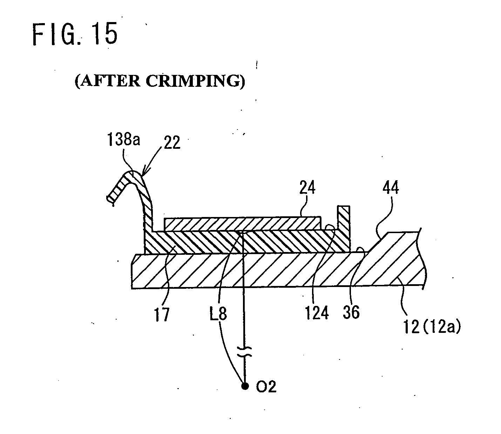

The wall thickness of the large-diameter tube 18 of the boot 22 is defined as the thickness L7 from the inner circumferential surface of the large-diameter tube 18, which is held against the smooth and continuous annular outer surface 36, to the outer circumferential surface of the large-diameter tube 18. As shown in FIG. 15, the inside diameter of the first fastening band 24 after it has been crimped is defined as the distance L8 from the center 02 of the crimped first fastening band 24 to the inner circumferential surface of the crimped first fastening band 24.

The large-diameter tube 18 and the small-diameter tube 19 are thus tightened respectively around the outer member 12 and the shaft 14, to result in a completed rotation drive force transmission mechanism 10.

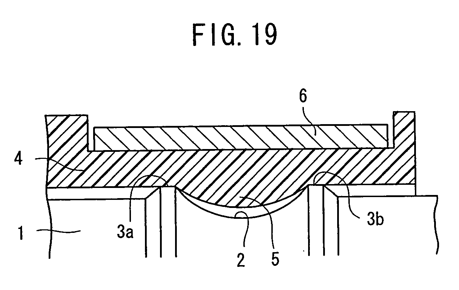

When the first fastening band 24 is crimped on the large-diameter tube 18, as described above, a space 142 is defined between the inner wall surface of the first peak 138a and the outer circumferential surface of the outer member 12 (see FIG. 19), and the annular ridge 46 on the inner circumferential surface of the large-diameter tube 18 engages within the annular engaging groove 38.

When the motor vehicle is traveling, the constant-velocity joint 10a (10b) rotates through the action of a differential gear. The rotational power of the constant-velocity joint 10a is transmitted through the outer member 12 to the shaft 14, ultimately rotating a tire in a given direction.

Actually, the space 142 is provided in a position where pebbles or the like expelled by the rotating tires may tend to hit the boot 22. Therefore, the space 142 is effective to lessen shocks applied to the boot 22 when the boot 22 is hit by pebbles or the like.

When the boot 22 is hit by pebbles or the like, therefore, the boot 22 is prevented from engaging the outer circumferential surface of the outer member 12 and hence the boot 22 is prevented from being unduly damaged.

When the motor vehicle makes a left turn or a right turn at an intersection, the shaft 14 axially slides in a direction into or out of the tripod constant-velocity joint 10a (10b). At this time, the boot 22 follows the displacement of the shaft 14 while the bellows 136 is extended or curved. Therefore, the ability to adjust the spring constant of the bellows 136 is reduced. Stated otherwise, the curved portion 148 is effective to adjust the spring constant of the boot portion between the small-diameter tube 19 and the bellows 136.

As described above, the wall thickness of the first peak 138a of the bellows 136 is greater than that of the remaining second through fourth peaks 138b through 138d. Consequently, the second through fourth peaks 138b through 138d are more flexible than the first peak 138a. Furthermore, since the radius of curvature of the first valley 140a is greater than that of the remaining second and third valleys 140b, 140c, the first valley 140a is elastically deformable to a greater extent than the second and third valleys 140b, 140c. Therefore, the bellows 136 has a high deforming capability, i.e., is easily deformable. Therefore, the boot 22 formed of synthetic resin, i.e., PTE, is more flexible than boots of rubber, although PTE is more rigid than rubber.

Deforming stresses that act on the boot 22 when the shaft 14 is displaced are reduced when the second through fourth peaks 138b through 138d and the first through third valleys 140a through 140c, and particularly the first valley 140a having a large radius of curvature, are extended or curved. Specifically, although the deforming capability of the first peak 138a is small, since the deforming capability of the first valley 140a contiguous to the first peak 138a is large, the first peak 138a is less subject to stress concentration, whereby cracking of the boot 22 between the first peak 138a and the large-diameter tube 18 is prevented.

Of all the peaks 138a through 138d, the first peak 138a has the greatest rigidity. Further, of all the valleys 140a through 140c, the first valley 140a has the greatest deformability. Accordingly, the extent to which the boot 22 is deformed can easily be adjusted, or stated otherwise, the spring constant of the boot 22 can easily be adjusted to a value within a given range, by setting the wall thickness of the first peak 138a and the radius of curvature of the first valley 140a to appropriate values.

By adjusting the spring constant of the boot 22 in this manner, the displacement of the shaft 14 can be controlled. For example, when the shaft 14 is displaced in a direction so as to be further inserted into the outer member 12, because the bellows 136 is compressed only by a length depending on the spring constant, the bellows 136 is prevented from becoming further compressed, and hence the shaft 14 is prevented from being further inserted into the outer member 12.

According to the present embodiment, therefore, when the tripod constant-velocity joints 10a, 10b are coupled respectively to opposite ends of the shaft 14, the shaft 14 is slidable a greater distance than if a tripod constant-velocity joint were coupled to one end of the shaft 14 and a Barfield-type constant-velocity joint were coupled to the other end of the shaft 14. In addition, by adjusting the spring constant of the boot 22, it is possible to allow the shaft 14 to slide an appropriate distance, and the distal end portion of the shaft 14 is prevented from hitting the inner bottom surface of the outer member 12, i.e., so-called bottoming is prevented from occurring.

Since bottoming is prevented from occurring, the tripod constant-velocity joint does not need a stopper, such as a spring or the like, which has heretofore been used to prevent bottoming. Thus, the cost of the tripod constant-velocity joint can be reduced, and the tripod constant-velocity joint can easily be assembled, since assembly of the stopper is not required.

According to the present embodiment, furthermore, the small-diameter tube 19 includes the curved portion 148 adjacent to the second mounting slot 128. Since the curved portion 148 thickens the boot portion between the small-diameter tube 19 and the fourth peak, the boot portion is sufficiently rigid. Even when deforming stresses are concentrated on the boot portion between the small-diameter tube 19 and the fourth peak 138d due to repeated displacement of the shaft 14, the boot portion is prevented from cracking.

Furthermore, the curved portion 148 makes it easy to keep the spring constant of the boot 22 within a given range.

In order to make the first peak 138a thicker than the other second through fourth peaks 138b through 138d, and also to make the radius of curvature of the first valley 140a greater than those of the other second and third valleys 140b, 140c, correspondingly shaped cavities may simply be provided in a mold for forming the boot 22. Accordingly, the manufacturing cost of the boot 22 remains essentially the same, and it is not difficult to mold the boot 22.

As described above, the boot 22 is prevented from becoming damaged by pebbles or the like, is flexible enough to be easily elastically deformed in response to displacement of the shaft 14, and is less liable to cracking. The rotation drive force transmission mechanism 10, which incorporates the boot 22 therein, is relatively simple in structure and inexpensive to manufacture.

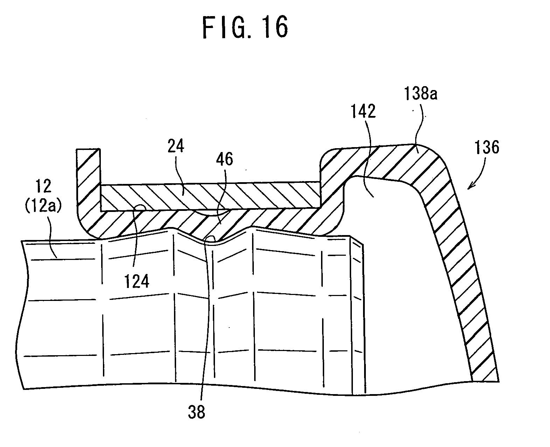

In the present embodiment, a space 142 is provided by the first peak 138a, which is greater in diameter than the large-diameter tube 18. However, as shown in FIG. 16, the space 142 may be provided by the first peak 138a, the outside diameter of which is substantially the same as the diameter of the large-diameter tube 18.

In the present embodiment, the first tripod constant-velocity joint 10a coupled to one end of the shaft 14 and the second tripod constant-velocity joint 10b coupled to the other end of the shaft 14 are angularly positioned 180° out of phase with each other. With this arrangement, vibrations produced in axial directions of the shaft 14 due to induced thrust forces are oriented in opposite directions and therefore cancel each other, so that the shaft 14 is prevented from being vibrated in the axial direction.

A procedure for establishing an end shape of the outer member 12, i.e., a shape of the boot mount 20, on which the large-diameter tube 18 of the boot 22 is mounted, shall be described below.

First, the inside diameter D1 of the large-diameter tube 18 of the boot 22 and the outside diameter D2 of the boot mount 20 of the outer member 12 should be selected so as to satisfy the relationship D1 ≤ D2, as described above.

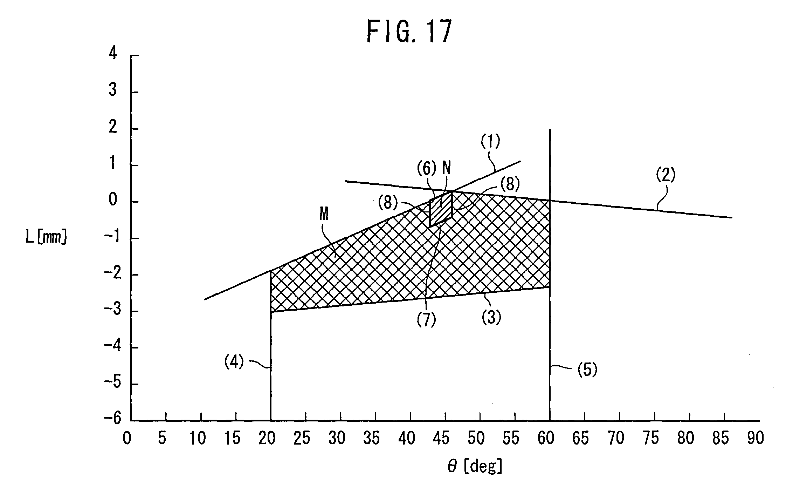

Then, the difference between the horizontal distance L2, between the groove bottom 42 of the engaging groove 38 and the point where the slanted surface 44 starts to rise from the annular outer surface 36, and the horizontal distance L1, between the crest 46a of the annular ridge 46 and the end face of the boot 22, is represented by L (L = L2 - L1). The relationship between the angle θ of the annular slanted surface 44 to the annular outer surface 36 and the difference L is selected to reside within an allowable range M, as shown (crosshatched) in FIG. 17.

The allowable range M is set as an area surrounded by the following equations (1) through (5), with respect to the difference L (mm) and the angle θ (°):

$$\text{(1)} \quad L \leq 0.0833\theta - 3.4796$$

$$\text{(2)} \quad L \leq -0.0188\theta + 1.2353$$

$$\text{(3)} \quad L \geq 0.0176\theta - 3.372$$

$$\text{(4)} \quad \theta \geq 20$$

$$\text{(5)} \quad \theta \leq 60.$$

In FIG. 17, straight lines (1) through (5) correspond respectively to the above equations (1) through (5). If the angle θ is less than 20°, then the end of the boot 22 rides a greater distance onto the slanted surface 44, resulting in a reduction in sealing and positioning ability. If the angle θ is greater than 60°, then the slanted surface 44 becomes less machinable.

In view of the sealing ability, positioning ability, and machinability, which are taken together into account, an optimum range N shown (via hatching) in FIG. 7 may be set as an area surrounded by the following equations (6) through (8), with respect to the difference L (mm) and the angle θ (°):

$$\text{(6)} \quad L \leq 0.0833\theta - 3.4796$$

$$(7) \quad L \geq 0.0833\theta - 4.796$$

$$(8) \quad \theta = 45 \pm 1.5.$$

Equations (1) through (8) have been determined through experiments and simulations.

In the present embodiment, the end shape of the outer member 12, i.e., the shape of the boot mount 20, is selected based on the above allowable range M, for thereby reliably positioning the large-diameter tube 18 of the boot 22 on the boot mount 20 of the outer member 12 when the first fastening band 24 is tightened.

Stated otherwise, if the distance L2 between the groove bottom 42 of the engaging groove 38 and the point where the slanted surface 44 starts to rise from the annular outer surface 36, and the angle $\theta$ of the annular slanted surface 44 to the annular outer surface 36, are set to respective values within the allowable range M shown in FIG. 17, then the end shape of the outer member 12 may be selected such that when the first fastening band 24 is tightened, the large-diameter tube 18 of the boot 22 is reliably positioned on the boot mount 20, without being displaced toward the shank 12b or toward the end edge of the opening 11, a desired sealing ability for the outer member 12 is provided, and the outer member 12 is highly machinable.

If the distance L1 between the crest 46a of the annular ridge 46 and the end face of the boot 22 is preset, and a commercially available general-purpose boot is employed, then rotation drive force transmission mechanisms 10 can efficiently be mass-produced at a reduced cost.

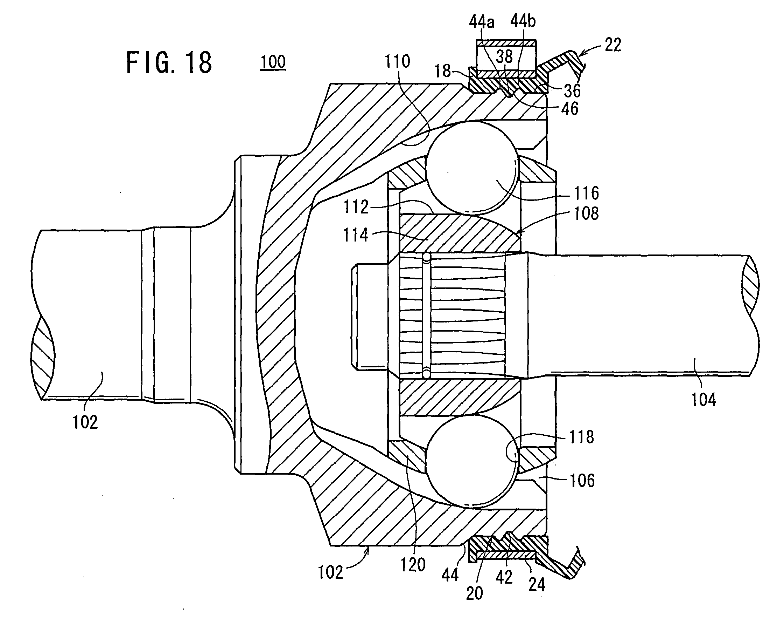

In the above embodiment, the end shape of the outer member 12, i.e., the shape of the boot mount 20, has been described with respect to the rotation drive force transmission mechanism 10, wherein tripod constant-velocity joints 10a, 10b are mounted on respective opposite ends of the shaft 14. However, the shape of the boot mount 20 itself is not limited to that of tripod constant-velocity joints 10a, 10b. Rather, the shape of the boot mount 20 may also be applied to the end shape of an outer member 102 of a Barfield-type constant-velocity joint 100, as shown in FIG. 18, for example. The Barfield-type constant-velocity joint 100 shown in FIG. 18 shall be described below. Those parts of the Barfield-type constant-velocity joint 100, which are identical to those of the tripod constant-velocity joints 10a, 10b, shall be denoted using identical reference characters, and detailed description thereof shall be omitted.

The Barfield-type constant-velocity joint 100 comprises an outer member 102, having a shank 102b coupled to a first shaft (not shown), and an inner member 108 coupled to a second shaft 104 and housed in an opening 106 in the outer member 102.

The outer member 102 has six axial first guide grooves 110 defined in an inner wall surface thereof and angularly spaced at 60° intervals around the axis of the outer member 102.

The inner member 108 comprises an inner ring 114 having a plurality of second guide grooves 112 defined in an outer circumferential surface thereof, in alignment with the respective first guide grooves 110, a plurality of (e.g., six) balls 116 rotatably disposed in the first guide grooves 110 and the second guide grooves 112 providing a rotational torque transmitting function, and a retainer 120 having a circumferential array of retaining windows 118, for retaining the balls 116 respectively therein, interposed between the outer member 102 and the inner ring 114.

The distance L2 on the end of the outer member 102, and the angle $\square$ of the slanted surface 44, are set to values within the allowable range M and the optimum range N, as with the outer member 12 of the tripod constant-velocity joints 10a, 10b, and shall not be described in detail below.

The process of crimping the first fastening band 24 is not only applicable when the boot 22 is made of PTE, but is also applicable if the boot is made of rubber such as chloroprene rubber (CR), chlorinated polyethylene rubber (CM), or the like, for achieving an appropriate surface pressure by managing the band crimping ratio. According to such a modification, since the boot is relatively easily extensible, the managed range of band crimping ratios should preferably be greater than the range in the above embodiment, e.g., should preferably be set to a range from 0.1 to 1.6 %.

The process of crimping the first fastening band 24 is further applicable if a Barfield-type constant-velocity joint 100 is used in place of the tripod constant-velocity joints 10a, 10b.

**Claims**

1. A mechanism (10) for transmitting a rotational drive force, comprising:

    a shaft (14);
    a first tripod constant-velocity joint (10a) axially movably coupled to an end of said shaft (14); and

a second tripod constant-velocity joint (10b) axially movably coupled to another end of said shaft (14);

said first tripod constant-velocity joint (10a) and said second tripod constant-velocity joint (10b) being identical in structure to each other and fixed with respect to each other in opposite phase;

each of said first tripod constant-velocity joint (10a) and said second tripod constant-velocity joint (10b) comprising an outer member (12) and a boot (22) of synthetic resin fastened to said shaft (14) and to said outer member (12) by respective boot bands (24, 25), said boot (22) having a large-diameter fixing member (18) for receiving an end of said outer member (12) inserted therein, a small-diameter fixing member (19) for receiving an end portion of said shaft (14) inserted therein, and a bellows (136) interposed between said large-diameter fixing member (18) and said small-diameter fixing member (19), said bellows (136) being progressively smaller in diameter from said large-diameter fixing member (18) toward said small-diameter fixing member (19);

said bellows (136) comprising an alternate succession of peaks (138a, 138b, 138c, 138d) and valleys (140a, 140b, 140c);

wherein when said outer member (12) is inserted in said large-diameter fixing member (18), one of said peaks (138a) which is closest to said large-diameter fixing member (18) has a wall thickness greater than the remaining peaks (138b, 138c, 138d).

2. A mechanism (10) according to claim 1, wherein:

said outer member (12) has a boot mount (20) on which said boot (22) is mounted;
said boot mount (20) comprises an annular surface (36) of substantially flat, said boot (22) being mounted on said annular surface (36), an engaging groove (38) defined in said annular surface (36), and an annular slanted surface (44) inclined to said annular surface (36);
a groove bottom of said engaging groove (38) and a point where said slanted surface (44) starts to rise from said annular surface (36) are spaced horizontally from each other by a distance L2;
said boot (22) has an annular ridge (46) engaging in said engaging groove (38), a crest (46a) of said annular ridge (46) and an end face of said boot (22) are spaced horizontally from each other by a distance L1; and

when the difference between said distance L2 and said distance L1 is represented by L (L = L2 - L1), and said annular slanted surface (44) is inclined to said annular surface (36) by an angle θ, said difference L (mm) and said angle θ (°) are set to values in ranges satisfying the following equations (1) through (5):

$$(1)\ L \leq 0.0833\theta - 3.4796$$

$$(2)\ L \leq -0.0188\theta + 1.2353$$

$$(3)\ L \geq 0.0176\theta - 3.372$$

$$(4)\ \theta \geq 20$$

$$(5)\ \theta \leq 60.$$

3. A mechanism (10) according to claim 1, wherein said difference L (mm) and said angle θ (°) are set to values in ranges satisfying the following equations (6) through (8):

$$(6)\ L \leq 0.0833\theta - 3.4796$$

$$(7)\ \mathtt{L} \geq 0.0833\theta - 4.796$$

$$(8)\ \theta = 45 \pm 1.5.$$

4. A mechanism (10) according to claim 1, wherein one of said valleys (140a) which is closest to said large-diameter fixing member (18) has a radius of curvature greater than those of the remaining valleys (140b, 140c).

5. A mechanism (10) according to claim 1 or 4, wherein said small-diameter fixing member (19) has a band mounting slot (128) for receiving one of said boot bands (25) therein, and said boot (22) has a curved portion (148) extending from a bottom of said band mounting slot (128) to a side wall of one of said peaks (138d) which is closest to said small-diameter fixing member (19), said curved portion (148) having a radius of curvature ranging from 0.4 to 0.6 mm.

6. A constant-velocity joint (10a) comprising:

an outer member (12) including a boot mount (20) disposed on an end thereof; and
a boot (22) of synthetic resin including a tubular fixing member (18) disposed on an end thereof;
wherein said fixing member (18) is fixed to said boot mount (20) by mounting said fixing member (18) on said boot mount (20) and thereafter fastening said fixing member (18) with a boot band (24);
said boot mount (20) comprises an annular surface (36) of substantially flat, said boot (22) being mounted on said annular surface (36), an engaging groove (38) defined in said annular surface (36), and an annular slanted surface (44) inclined to said annular surface (36);
a groove bottom of said engaging groove (38) and a point where said slanted surface (44) starts to rise from said annular surface (36) are spaced horizontally from each other by a distance L2;

said boot (22) has an annular ridge (46) engaging in said engaging groove (38), a crest (46a) of said annular ridge (46) and an end face of said boot (22) being spaced horizontally from each other by a distance L1; and
when the difference between said distance L2 and said distance L1 is represented by L (L = L2 - L1), and said annular slanted surface (44) is inclined to said annular surface (36) by an angle $\theta$, said difference L (mm) and said angle $\theta$ (°) are set to values in ranges satisfying the following equations (1) through (5):

$$(1)\ \mathtt{L} \leq 0.0833\theta - 3.4796$$

$$(2)\ \mathtt{L} \leq -0.0188\theta + 1.2353$$

$$(3)\ \mathtt{L} \geq 0.0176\theta - 3.372$$

$$(4)\ \theta \geq 20$$

$$(5)\ \theta \leq 60.$$

7. A constant-velocity joint (10a) according to claim 6, wherein said difference L (mm) and said angle $\theta$ (°) are set to values in ranges satisfying the following equations (6) through (8):

$$(6) \quad L \leq 0.0833\theta - 3.4796$$

$$(7) \quad L \geq 0.0833\theta - 4.796$$

$$(8) \quad \theta = 45 \pm 1.5.$$

**8.** A boot (22) of synthetic resin for use with a constant-velocity joint (10a) having an outer member (12), comprising:

a large-diameter tube (18) for receiving an end of said outer member (12) inserted therein;
a small-diameter tube (19) for receiving an end portion of a shaft (14) inserted therein; and
a bellows (136) interposed between said large-diameter tube (18) and said small-diameter tube (19) and being progressively smaller in diameter from said large-diameter tube (18) toward said small-diameter tube (19);

said bellows (136) comprising an alternate succession of peaks (138a, 138b, 138c, 138d) and valleys (140a, 140b, 140c);
wherein when said outer member (12) is inserted in said large-diameter tube (18), one of said peaks (138a) which is closest to said large-diameter tube (18) has an inner wall surface spaced from an outer wall surface of an open end of said outer member (12), providing a space (142) therebetween; and
said one of the peaks (138a) which is closest to said large-diameter tube (18) has a wall thickness greater than the remaining peaks (138b, 138c, 138d).

**9.** A boot (22) according to claim 8, wherein one of said valleys (140a) which is closest to said large-diameter tube (18) has a radius of curvature greater than those of the remaining valleys (140b, 140c).

**10.** A boot (22) according to claim 8 or 9, wherein said small-diameter tube (19) has a band mounting slot (128) for receiving a fastening band (25) therein, and said boot (22) has a curved portion (148) extending from a bottom of said band mounting slot (128) to a side wall of one of said peaks (138d) which is closest to said small-diameter tube (19), said curved portion (148) having a radius of curvature ranging from 0.4 to 0.6 mm.

**11.** A method of crimping a fastening band of a constant-velocity joint (10a) after an outer member (12) of the constant-velocity joint (10a) is inserted in a tubular insert (18) on an end of a joint boot (22) and the fastening band (24) is wound around an outer circumferential surface-of said tubular insert (18), comprising the step of:

managing crimping of said fastening band (24) based on-a band crimping ratio defined by the following equation (A):

band crimping ratio (%) = (the outside diameter of the outer member + the wall thickness of the joint boot before the fastening band is crimped)/the inside diameter of the fastening band after the fastening band is crimped   ···(A).

**12.** A method of crimping a fastening band according to claim 11, wherein said joint boot (22) comprises a joint boot of synthetic resin, and said band crimping ratio is in the range from 0.16 to 1.3 %.

**13.** A method of crimping a fastening band according to claim 11, wherein said joint boot (22) comprises a joint boot of rubber, and said band crimping ratio is in the range from 0.1 to 1.6 %.

**Amended claims under Art. 19.1 PCT**

. annular slanted surface (44) is inclined to said annular surface (36) by an angle θ, said difference L (mm) and said angle θ (°) are set to values in ranges satisfying the following equations (1) through (5):

$$(1) \quad L \leq 0.0833\theta - 3.4796$$

$$(2) \quad L \leq -0.0188\theta + 1.2353$$

$$(3) \quad L \geq 0.0176\theta - 3.372$$

$$(4) \quad \theta \geq 20$$

$$(5) \quad \theta \leq 60.$$

**3.** Amended) A mechanism (10) according to claim 2, wherein said difference L (mm) and said angle θ (°) are set to values in ranges satisfying the following equations (6) through (8):

$$(6) \quad L \leq 0.0833\theta - 3.4796$$

$$(7) \quad L \geq 0.0833\theta - 4.796$$

$$(8) \quad \theta = 45 \pm 1.5.$$

**4.** A mechanism (10) according to claim 1, wherein one of said valleys (140a) which is closest to said large-diameter fixing member (18) has a radius of curvature greater than those of the remaining valleys (140b, 140c).

**5.** A mechanism (10) according to claim 1 or 4, wherein said small-diameter fixing member (19) has a band mounting slot (128) for receiving one of said boot bands (25) therein, and said boot (22) has a curved portion (148) extending from a bottom of said band mounting slot (128) to

FIG. 1

FIG. 2

EP 1 890 047 A1

FIG. 3

FIG. 4

# FIG. 5

# FIG. 6

# FIG. 7

# FIG. 8

**(BEFORE CRIMPING)**

FIG. 9

# FIG. 10

# FIG. 11

## (AFTER CRIMPING)

FIG. 12

# FIG. 13

SURFACE
PRESSURE
[MPa]

SAME BAND CRIMPING QUANTITY

SAME BAND CRIMPING RATIO

OUTSIDE DIAMETER OF OUTER MEMBER [mm]

EP 1 890 047 A1

# FIG. 14

## (BEFORE CRIMPING)

# FIG. 15

**(AFTER CRIMPING)**

# FIG. 16

# FIG. 17

FIG. 18    100

EP 1 890 047 A1

FIG. 19

<table>
<tr><td colspan="2">INTERNATIONAL SEARCH REPORT</td><td>International application No.<br>PCT/JP2006/306040</td></tr>
</table>

A. CLASSIFICATION OF SUBJECT MATTER
*F16D3/84* (2006.01)

According to International Patent Classification (IPC) or to both national classification and IPC

B. FIELDS SEARCHED

Minimum documentation searched (classification system followed by classification symbols)
F16D3/84, F16J3/04, F16J15/52

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 9-112565 A (Honda Motor Co., Ltd.),<br>02 May, 1997 (02.05.97),<br>& EP 850798 A1 | 1-5 |
| X<br>Y | CD-ROM of the specification and drawings annexed to the request of Japanese Utility Model Application No. 46900/1993 (Laid-open No. 16072/1995)<br>(NOK Kabushiki Kaisha),<br>17 March, 1995 (17.03.95),<br>(Family: none) | 8,9<br>1-5,10 |
| X<br>Y | JP 11-166624 A (NTN Corp.),<br>22 June, 1999 (22.06.99),<br>& US 6244967 B1        & DE 19844987 A1<br>& FR 2769065 A1 | 6,7<br>2,3,12 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>20 June, 2006 (20.06.06) | Date of mailing of the international search report<br>04 July, 2006 (04.07.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/306040

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-329136 A  (Toyo Tire and Rubber Co., Ltd.),<br>19 November, 2003 (19.11.03),<br>(Family: none) | 5,10 |
| X<br>Y | JP 4-190981 A  (NTN Corp.),<br>09 July, 1992 (09.07.92),<br>& US 2003/0190963 A1    & EP 1364766 A1 | 11,13<br>12 |

Form PCT/ISA/210 (continuation of second sheet) (April 2005)

**INTERNATIONAL SEARCH REPORT**

| International application No. |
| --- |
| PCT/JP2006/306040 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

    The invention of claims 1 and 8 relates to the wall thickness of a mountain
section of a boot.
    The invention of claims 2, 3, 6, and 7 relates to the shape of a boot installation
section of an outer member.
    The invention of claims 4 and 9 relates to the curvature radius of a valley
section of a boot.
    The invention of claims 5 and 10 relates to the shape of a shaft member
installation section of a boot.
The invention of claims 11-13 relates to a tightening method of a clamp band.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9112565 A
- JP 7280092 A
- JP 11166624 A
- JP 54027266 U
- JP 55132525 U
- JP 2003214457 A